Europäisches Patentamt

European Patent Office

Office européen des brevets

(11) Publication number: **0 225 806**
**A2**

## (12) EUROPEAN PATENT APPLICATION

(21) Application number: **86309613.7**

(22) Date of filing: **10.12.86**

(51) Int. Cl.⁴: **B 24 B 3/36**

(30) Priority: **10.12.85 AU 3795/85**

(43) Date of publication of application:
**16.06.87 Bulletin 87/25**

(84) Designated Contracting States: **DE FR GB IT**

(71) Applicant: **TEMTOOL SALES PTY. LIMITED**
**257a Wellington Street**
**Collingwood Victoria 3066 (AU)**

(72) Inventor: **Robertson, Mervyn Frank Arthur**
**257a Wellington Street**
**Collingwood Victoria 3066 (AU)**

(74) Representative: **Frost, Dennis Thomas et al**
**WITHERS & ROGERS 4 Dyer's Buildings Holborn**
**London, EC1N 2JT (GB)**

(54) Tool holder.

(57) A tool holder incorporated in a grinding device and a grinding device having a body (22) which is mounted for movement along a transverse member (28), the body (22) having a tool receiving means (32) whereby the tool can be firmly supported relative to the body and a member (40) which may be pivotally attached to the body (41) extending from the body and which abuts a stop (42) which may be moveable (48) or profiled (61) to limit the movement of the tool holder towards a grinding wheel (11, 12), whereby location of the tool to be ground can be set and the tool can be ground accurately to form a bevil and to be honed to be transverse to its surface or in a profiled manner.

FIG. 4.

EP 0 225 806 A2

**Description**

TOOL HOLDER

This invention relates to a tool holder, and particularly, but not exclusively, to a tool holder for use when locating a tool relative to a grinding wheel.

Where a tool is to be ground, it is desirable that the angle of the tool relative to the grinding wheel can be accurately adjusted and that the tool can be moved transversely to the wheel to ensure that the bevel ground on the tool is even across the width of the tool.

It has been proposed, for example in Australian patent No. 468650 and corresponding U.S. patent No. 3733751 and British patent No. 1293729, originally in the name of Currie & Richards Components Pty. Limited, to provide a sharpening machine having a pair of wheels which are spaced and which are associated with a tool holder, whereby the tool to be sharpened can be moved across either of the wheels. In that particular machine a, first, coarse, wheel causes the grinding of the bevel on the tool and the second, fine, wheel, which is of a slightly smaller diameter than the first wheel, completes the finishing of the cutting edge of the tool, either by very fine grinding or by grinding and polishing.

A first object of the present invention is to provide a tool holder whereby the relative angle of the tool being held can be adjusted, but which, at the same time, permits the tool holder to be moved, say, across the face of a tool working member, such as a grinding wheel, hereinafter called, for convenience, a grinding wheel.

A second object of the invention is to provide a tool holder having associated therewith means whereby the actual angle of the tool relative to the grinding wheel can be readily set.

The invention, in its broadest sense, comprises a tool holder having a body, the body being mounted on a member transverse to the axis of the tool when the tool is located therein or thereon, and adapted for movement along this member, tool receiving means whereby the tool to be held can be firmly supported relative to the body and a member extending from the body, which means abut against a stop thereof limiting movement of the tool holder towards the tool working member.

In a first embodiment it is preferred that the member extending from the body be pivotally mounted to the body about an axis parallel to the axis of the transverse member, the arrangement being that the tool holder can be pivotted away from its work position without obstruction, but, when moved to the work position, the member is restrained, thus controlling the angle of the tool holder.

It is preferred that an adjustment means be provided whereby the angle of the means extending from the body can be readily adjusted.

In a secondary aspect of the invention, I provide means whereby a fixed tool angle can be achieved with the means comprising a plurality of stops mounted adjacent the tool holder, the stops being at different distances from the tool holder so that, when a tool is clamped in the tool holder and abutting a particular stop, then a required angle is obtained.

This specification will describe the invention associated with a grinding means and it is appreciated that the tool will be hollow ground, because of the periphery of the grinding means acting on the tool.

Thus, whilst in the specification we refer to an angle, it is appreciated that this would be relative to the position along the ground portion and can vary depending on how it is measured. However, there can be considered to be a mean angle defined by a plane passing through the hollow ground portion, and this will be considered to be the angle.

In order that the invention may be more readily understood, I shall describe two particular embodiments of the tool holder of the invention in reference to the accompanying drawings.

In the drawings:

Fig. 1 is a side view of one form of tool holder according to the invention;

Fig. 2 is the view taken along 2-2 of Fig. 1;

Fig. 3 shows one form of tool holder of the invention set in the sharpening position;

Fig. 4 shows the tool holder of Fig. 3 pivotted to allow access to the tool being sharpened;

Fig. 5 illustrates another form of tool holder of the invention;

Fig. 6 illustrates the provision of stepped stops on the body of the sharpening device.

Fig. 7 is a broken side elevation of a tool holder showing an alternate guide means;

Fig. 8 is a plan view showing the guide means of Fig. 7;

Fig. 9 is a broken view similar to portion of Fig. 1 showing a modified form of stop member;

Fig. 10 is a view similar to portion of Fig. 2 showing the stop member of Fig. 9 abutting a profile plate; and

Fig. 11 is a view along line 11-11 of Fig. 10 showing the profile plate in position.

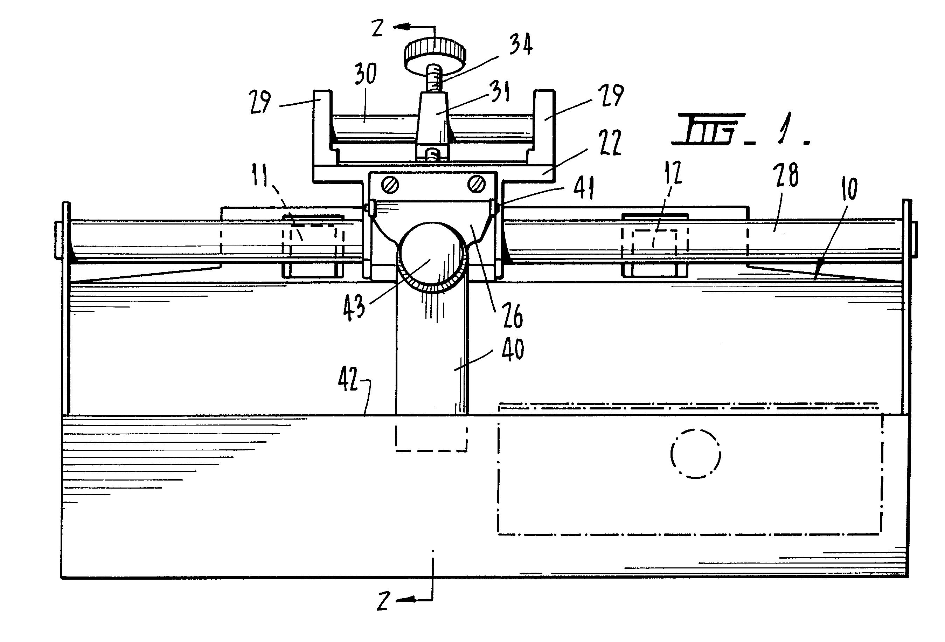

In Fig. 1 there is shown a tool sharpener 10 having a pair of spaced grinding wheels 11 and 12, which may preferably be coaxial, in which one wheel 11, the coarse wheel, has a slightly larger diameter than the other wheel 12, the fine wheel, whereby a tool 20 may initially have its bevel formed on the larger diameter wheel and may have its edge completed on the smaller diameter wheel.

This can generally considered to be a device similar to that illustrated in the previously mentioned patents.

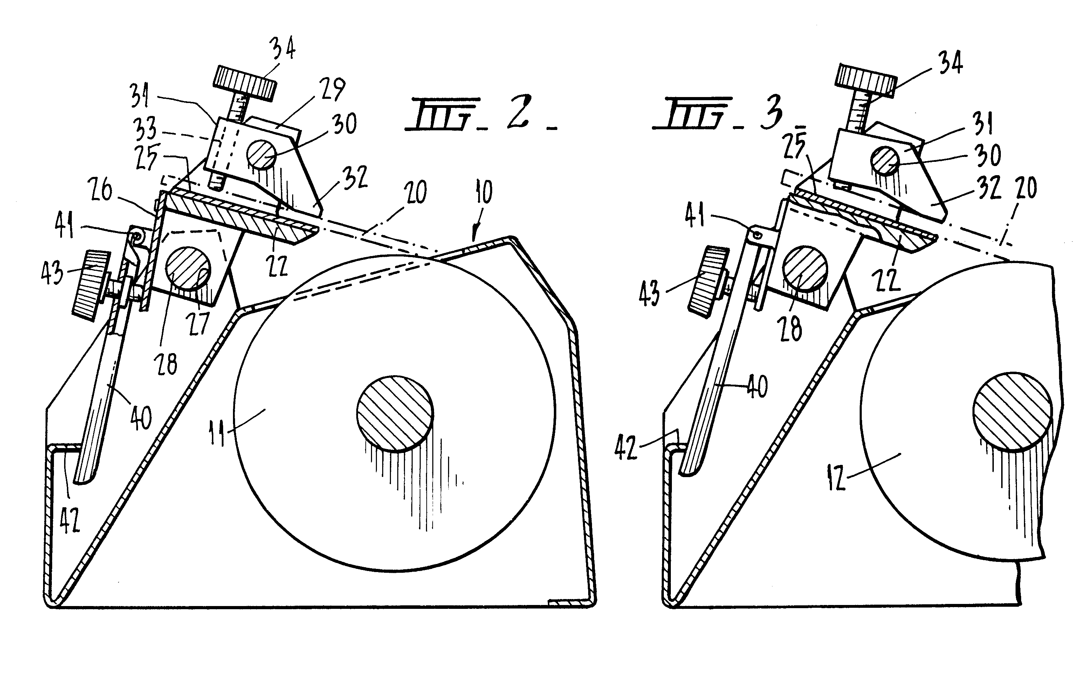

The tool holder of the invention has a body 22 having a flat tool receiving surface 25 underneath which there is a downward extension 26 having a support receiving aperture 27 therethrough, the support receiving aperture having its axis parallel to the plane of the flat tool receiving surface and at right angles to the required axis of the tool when located. This can best be seen in Fig. 2.

This support receiving aperture receives a support rod 28 which has its axis effectively parallel to the axes of the grinding wheel, and the aperture is of such a diameter as to permit the tool body to be able to be freely moved along the rod and rotated relative to the rod.

On either side of the flat tool receiving surface there may be an upwardly directed lug 29 or the like, which lugs are interconnected by a rod 30 parallel to the support rod and, on this rod, there can be pivotally located a tool clamp 31 which can be moved along the rod to be located substantially centrally of a tool located on the receiving surface and abutting one lug. The clamp comprises a nose 32 on one side of the rod and a threaded aperture 33 on the other side of the rod, through which aperture a clamp screw 34 passes, the arrangement being such that the clamp screw is brought down into contact with the tool to be held, causing the nose of the clamp to be moved into contact with the tool on the other side of the pivotal axis, so the tool is firmly located on the receiving surface of the body.

If required, there could be an alternative form of clamp with screws contacting the tool at two, or more, different positions.

In a first embodiment, mounted on the rear surface of the downward extension, is a stop member 40 as best shown in Fig. 2, the mounting being by means of a pivot 41 parallel to the axis of the support arm and this member extends downwardly behind a stop surface or edge 42 which may be formed integrally with part of the body of the machine and which is parallel to the support arm or, alternatively, may be a plate or the like fitted to the body of the machine.

Passing through the member 40 and in line with the downward extension from the body 26, there is an adjustment screw 43 which can be used to vary and angle between the member and the body of the tool holder.

The further the screw 43 is screwed through the aperture in the member 40, the greater the angle between the member and the body of the tool holder, and the less the angle between any tool in the tool holder and the grinding wheel.

It will be appreciated that, because the member 40 is pivotally connected to the downward extension 26 of the tool holder body, it is possible to rotate the tool holder body away from the grinding wheels, so that the angle between the downwardly extending member and the stop member is increased and, during such movement, a tool to be sharpened can readily be located and clamped onto the top of the tool receiving surface.

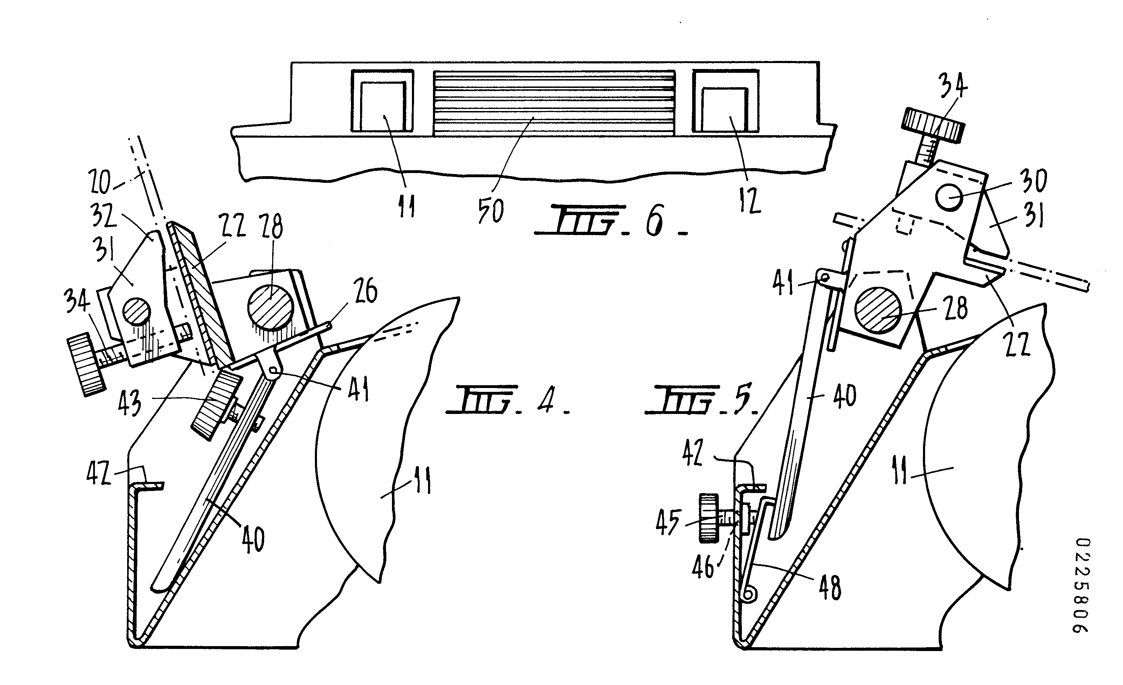

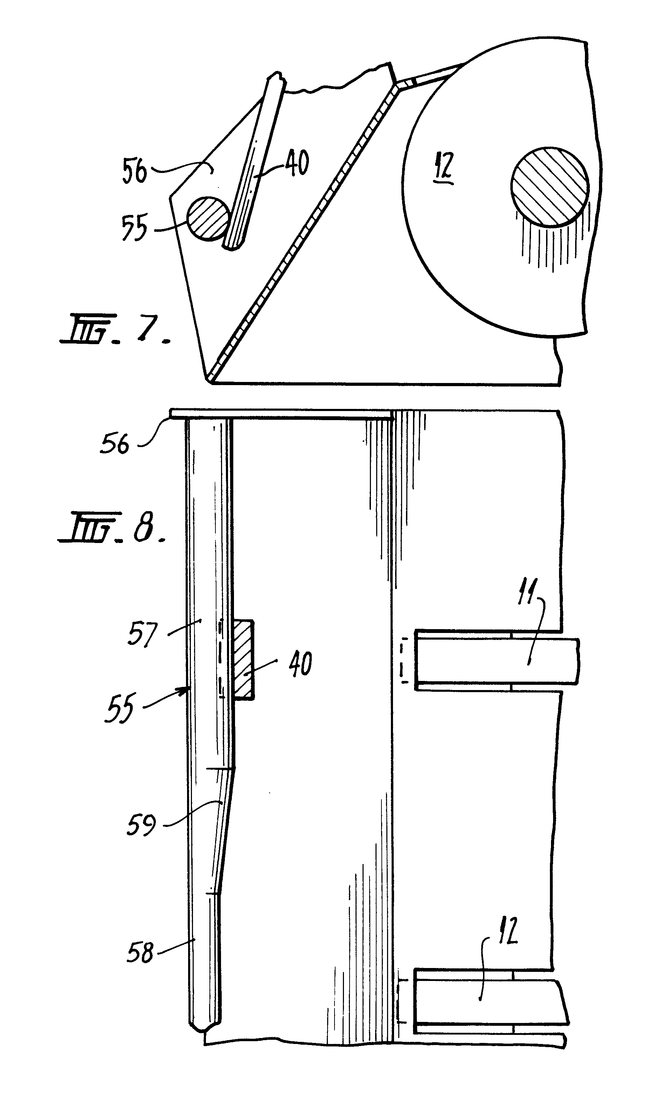

The two possible conformations are shown in Figs. 3 and 4.

Fig. 3 illustrates the tool holder of the invention in the grinding position.

Fig. 4 shows the tool holder pivotted back away from the grinding wheel, allowing a tool to be fitted or removed.

Also the tool can readily be removed from contact with the grinding wheel and examined without altering the location of the tool in the clamp.

If the tool is, for example, a chisel 20, the chisel blade will be able to be received on the surface and can be clamped so that one side of the chisel blade abuts one of the lugs 29 and the clamp can be moved along its rod 28 to be effectively central of the blade and then by tightening of the clamp screws 34, so the nose of the clamp and the screw come into contact with the blade, and firmly holds the blade.

Similarly, if the tool to be sharpened is a plane iron, the same operation is effected, and it will be seen that, notwithstanding the difference in thickness between the plane iron and the blade, the clamping can be done effectively.

If, for example, the tool to be sharpened was a buzzer blade, which is relatively wide, I can provide a stop member on the flat tool receiving surface 25 against which the blade can be located and the blade is clamped in position as described in respect of the other types of tools.

When the blade is properly located, which location includes the distance the blade extends outwardly from the tool holder, the required angle for the blade can be achieved by adjustment of the screw member 43 passing through the member extending downwardly and the blade is sharpened, initially, by moving it across the larger diameter coarse, wheel 11 so that the bevel is formed.

It will be seen that the relationship of the support arm and the associated aperture through the downward extension of the body causes this movement to be transverse to the axis of the wheel and the relationship of the member relative to the stop surface or edge is the same, so that there is no obstruction to such movement and such movement leads to a hollow ground bevel of a constant angle across the width of the blade.

When the cutting edge of the blade is to be finished, the body is moved across to adjacent the smaller diameter, fine, wheel 12 and the difference in diameter of the two wheels may be such that the fine wheel only contacts the outer extremity of the blade. Alternatively, the screw 43 could be adjusted to vary this angle.

In a second alternative, the stop surface or edge 42 could be relieved adjacent the fine wheel so the wheel rather than the stop member limits the movement of the tool holder.

The sharpening action is completed by this operation.

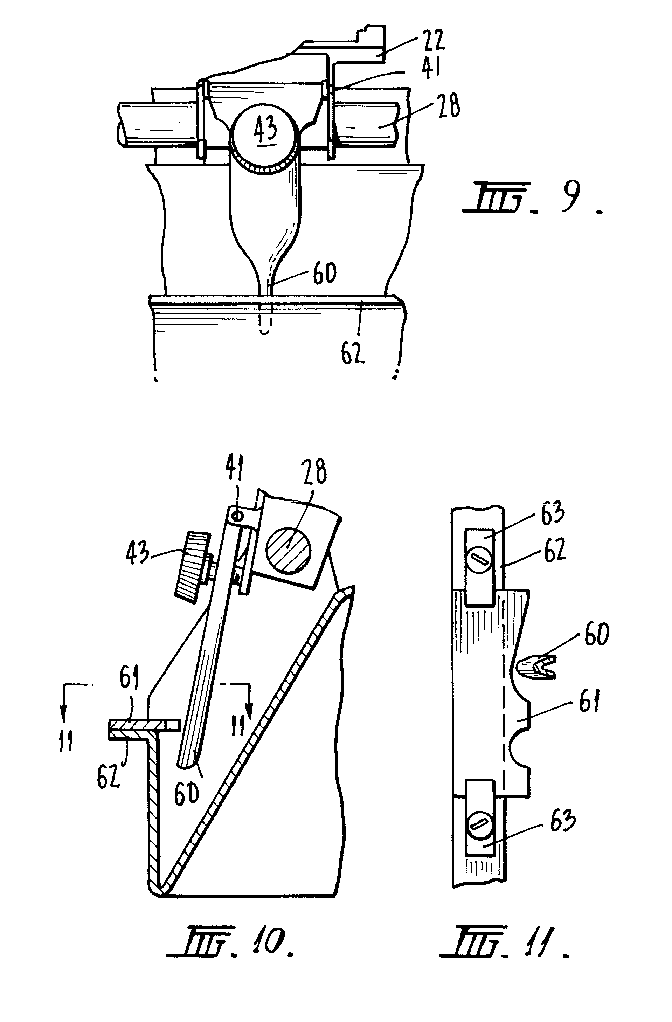

Fig. 5 illustrates an alternative method of adjustment of the angle of the blade to be sharpened relative to the wheel by providing the stop surface separate from the edge 42 on the body of the machine so that the stop surface can be moved inwardly or outwardly relative to the body of the tool receiving member.

This may preferably be done by hinging an elongate member 48 running across the width of the tool along its lower surface on an axis parallel to the axis of the support rod 28 and by providing means to locate this member. The means may comprise one or more adjustment screws 45 passing through apertures in the body 46 which abuts the back of the member 48.

It is preferred that the member is held back against these screws by springs (not shown) or the like. However, when the tool is moved forwardly into contact with the wheel, there will be an outward force adjacent the lower end of the stop member which will cause the transverse member 48 to be positively located.

In this case, then, whilst the member extending downwardly from the body 40 remains pivotally located to the downward extension 26, there is no adjustment adjacent the pivot, the whole of the adjustment being done by the transverse member and its associated adjustment screw.

It may be preferred to provide two such transverse members 48, one located substantially in front of the larger diameter wheel 11 and the other located substantially in front of the smaller diameter wheel 12 so that two separate angles can be achieved, so that, if a number of tools of the same general type are being sharpened, it is possible to obtain consistent bevels and final grading of the blade relative to the wheels.

Figs. 7 and 8 show a still further and preferred arrangement.

In this form the guide means 55, which is in the form is a bar, is located between the two side wings 56 of the tool holder, which wings extend further than those on the form illustrated earlier.

The bar, at two different positions along its length, extend a different distance towards the wheels 11, 12. As illustrated, the bar has a pair of faces 57, 58 which are interconnected by a ramp 59 and against which the stop member 40 can abut.

As the tool holder is moved along the support rod 28 and is adjacent one wheel, the stop member acts against the face 57 causing the first, bevelling, grinding angle to be achieved and, when it is moved, so the stop member abuts the face 58, the second, final, sharpening grinding angle is achieved. Alternatively, the second, sharpening, angle may be obtained when the stop is not effective and the tool rests against the wheel 12.

It will be seen that, by correct adjustment, it is possible to ensure that the amount of metal removed from the tool is restricted, thus enhancing tool life.

In a further aspect of the invention, I may provide means whereby the actual length of extension of the tool from the flat tool receiving surface can be accurately gauged so that the bevel can be accurately repeated. This is illustrated in Fig. 6 of the drawings.

In order to do this, I may provide, on the tool body, between the two wheels, a series of stepped stop members 50, each of which permits a degree of extension of a tool blade from the flat tool receiving surface equivalent to a required angle on the larger diameter wheel.

Where such stop members are provided, it is only necessary to correctly locate the blade, to move the body into alignment with one of the stop members, hold the tool in the tool receiving member loosely and move the tool outwardly until it strikes the stop member 50 and is located thereagainst.

The clamp screw is then tightened and the tool is held in its required position.

It will be seen that this can be particularly useful for relatively wide blades as it not only sets the extension but also ensures that the edge of the blade is parallel to the stop, which, in turn, is parallel to the axis of the wheels.

In use of such an arrangement, the blade is first located by abutment against one of the stops 50, the bevel is formed and then, depending upon the form of invention used, so either the angle of the tool is varied, or the angle of the tool changes as it is moved across to the smaller diameter blade because of the degree of adjustment of the stop surface or edge.

In an alternative arrangement I may provide a single, adjustable stop member which can be located either at any position along the surface 51 or can be located at any required position along this surface.

The embodiment illustrated in Figs. 9 to 11 shows an arrangement whereby blades of a particular profile can be formed and/or sharpened.

In this arrangement, Fig. 9 is effectively similar to Fig. 1 but it can be seen that, in this case, the stop member 60, instead of having substantial width as has the stop member 40, is preferably narrow adjacent the end at which it abuts a stop surface, as will be described.

In order to retain strength in the stop member 60, the lower portion may be U-shape, as can be seen in Fig. 11.

In this embodiment I provide a stop plate 61 which can best be seen in Fig. 11, which plate may be connected to a flange 62 which is formed as part of the body as was the stop surface 42 on the earlier embodiment.

This plate 61 is removeable and, as shown in Fig. 11, may be held in position by clamps 63 but it could equally be held in position by a tool clamp similar to tool clamp 31 described in relation to the earlier embodiment.

It will be seen that, by providing the stop plate 61 with a profiled inner surface, and in association with the relatively narrow stop member 60, the tool being worked will be caused to adopt positions which vary depending upon the position on the plate 61 contacted by the stop member 60. Thus, a tool can be worked to form a profile which, in the simplest form, is similar to the profile of the stop plate 61.

It will be appreciated that, if grinding wheels are being used, these will either have to be thin, so that the area cut closely follows the contour or, alternatively, these could, themselves, be contoured and it is possible to do this by locating a diamond dresser in the tool receiving means and traversing the profile on the plate 61 on a number of occasions, adjusting the screw member 43 to increase the depth of cut on different traverses, so that the wheel itself adopts a profile similar to the profile of the stop plate 61.

When a tool is placed in the tool holder in place of the diamond dresser then this is located in the correct orientation relative to the profiled wheel and sharpening is achieved without movement of the tool and tool holder.

It will, of course be necessary in such an arrangement to ensure that the stop plate 61 is accurately aligned relative to the wheel, but this is readily easily done, and it will also be appreciated that, if the tool is to be worked by two different wheels, then there will need to be two profiles on the stop plate 61 which may vary slightly depending upon the required end result.

Where a profiled plate is used, it will be appreciated that the profile of the plate or profiles of the plates will not necessarily be the same as the required profile of the tool as the width of the wheel must be accommodated.

It can be seen that by the use of this embodiment of the invention blades of various profiles can effectively be sharpened and this can be of great advantage to persons who use such blades.

Whilst, in this description, I have described a tool receiving member used in association with a particular type of sharpening machine, it will be appreciated that a tool receiving member as described can be used anywhere it is required that a tool present a constant and predetermined angle relative to some face or surface.

Also, whilst I have described herein two specific methods of adjusting the angle of the body of the tool receiving member relative to the working surface, other methods of adjustment may be proposed which permit at least a substantial degree of rotation of the body away from the point of contact with the working surface, whilst providing the required fixed angle towards the working surface.

**Claims**

1. A tool holder comprising a body (22), the body being mounted on a member (28) transverse to the axis of the tool (20) when the tool is located therein or thereon, and adapted for movement along this member, tool receiving means (32) whereby the tool to be held can be firmly supported relative to the body and a member (40) extending from the body which means abut against a stop (42) thereof limiting movement of the tool holder towards a tool working member (11).

2. A tool holder as claimed in claim 1 in which the member extending from the body is pivotedly mounted to the body about an axis (41) substantially parallel to the axis of the transverse member (28).

3. A tool holder as claimed in any one of the preceding claims wherein the angle of the means extending from the body relative to the body, can be adjusted (43).

4. A tool holder as claimed in any one of the preceding claims wherein the stop (42) comprises a longitudinal means against which the member extending from the body abuts.

5. A tool holder as claimed in claim 4 wherein the stop comprises a removeable plate (61) which has a profile which can be followed by the means extending from the body (60) to thereby alter the orientation of the tool holder relative to the tool working member.

6. A tool holder as claimed in any one of the preceding claims wherein the member extending from the body includes means (43) for adjusting the distance between the means and the body so as to alter the angle of the tool holder relative to the work position.

7. A tool holder as claimed in claims 1 to 4 wherein the stop means (48) is pivotedly connected to a support and include means (45) for adjusting the angle of the stop means relative to the support.

8. A tool holder as claimed in any one of the preceding claims wherein the stop (55) has a surface or edge which is relieved so that the angle of the tool holder may be varied depending on the depth of the relief.

9. A tool grinding device including one or more grinding wheels (11, 12) and including the tool holder according to any one of the preceding claims.

10. A grinding device as claimed in claim 9 wherein there are two grinding wheels, one (11) a coarse grinding wheel and the other (12) a fine grinding wheel.

11. A grinding device as claimed in claim 9 or claim 10 wherein the stop against which the member extending from the body abuts is part of (42) or is attached to (48) a body of the device.

12. A grinding device as claimed in claim 11 wherein the stop comprises an inwardly directed edge (42) against which the member abuts.

13. A grinding device as claimed in claim 11 wherein the location of the stop can be varied (45) to vary the angle of grinding.

14. A grinding device as claimed in claim 11 wherein the stop comprises a bar (55) extending across the device and having a first portion and a second portion, the first portion (53) being spaced from the grinding wheel a distance less than the second portion (58) whereby the angle of the tool holder differs when the member extending from the body is in contact with the two different portions.

15. A grinding device as claimed in claim 14 wherein there is a smooth ramp (59) between the first and second portions of the rod.

16. A grinding device as claimed in claim 11 wherein the stop comprises a removeable plate (61), the inwardly directed surface of which is profiled so that, when the tool holder is moved across the plate, the position of the member extending from the body (60) thereof is caused to vary thereby varying the position of the body relatively to the grinding wheel(s).

17. A grinding device as claimed in any one of claims 11 to 16 wherein the means whereby the actual length of extension of the tool can be gauged are stepped stops (50) located on the body of the grinding device.

18. A grinding device as claimed in any one of claims 11 to 16 wherein the means whereby the actual length of the extension of the tool can be gauged is a stop moveably located on the body of the grinding device.

0225806

FIG - 1.

0225806

FIG - 3 -

FIG - 2 -

0225806

FIG. 6.

FIG. 5.

FIG. 4.

0225806

FIG. 7.

FIG. 8.

0225806

FIG. 9.

FIG. 10.

FIG. 11.